# EUROPÄISCHE PATENTSCHRIFT

(11) **EP 4 051 520 B1**
(45) Veröffentlichungstag und Bekanntmachung des Hinweises auf die Patenterteilung: **14.08.2024**
(21) Anmeldenummer: 20789882.6
(22) Anmeldetag: 02.10.2020
(51) Int. Cl.: B60J 5/06, B60J 10/86, B60J 5/12, F21S 43/236, F21S 43/237, F21S 43/239, F21S 43/241, F21S 43/245, F21S 43/20, F21S 43/31, B60Q 3/217, B60Q 3/51, B60Q 3/53, B60Q 3/62, B60Q 3/78, B60Q 1/32, B60J 5/04, B60Q 3/41, B60Q 3/64

(54) **TÜRFLÜGEL MIT LEUCHTPROFIL FÜR EIN FAHRZEUG**
DOOR PANEL WITH A ILLUMINATION PROFILE FOR A VEHICLE
PORTE AVEC UN PROFIL ILLUMINÉ POUR VÉHICULE

(30) Priorität: 31.10.2019 DE 202019106056 U
(43) Veröffentlichungstag der Anmeldung: 07.09.2022
(73) Patentinhaber: Bode - Die Tür GmbH, 34123 Kassel (DE)
(72) Erfinder: AREND, Ulrich, 34576 Dickershausen (DE); GLÄSEL, Gerd, 34266 Niestetal (DE); RASEKHI, Abbas, 34128 Kassel (DE)
(74) Vertreter: Patentanwälte Bauer Vorberg Kayser
(86) Internationale Anmeldenummer: PCT/EP2020/077689
(87) Internationale Veröffentlichungsnummer: WO 2021/083611

(56) Entgegenhaltungen:
- EP-A1- 3 121 362
- EP-A1- 3 409 557
- DE-A1- 102006 011 108
- FR-A1- 3 055 348
- US-A1- 2019 255 923

## Beschreibung

Die vorliegende Erfindung betrifft einen Türflügel für Kraftfahrzeuge und Schienenfahrzeuge, mit den Merkmale des Oberbegriffs des Patentanspruchs 1.

Einstiegssysteme von Kraftfahrzeugen und Schienenfahrzeugen umfassen ein oder zwei Türflügel, die über eine Schiebe-, Schwenk- oder Schwenkschiebebewegung einen Einstiegsbereich eines Busses oder einer Bahn verschließen können.

Die Türflügel können beispielsweise Ganzglastürflügel sein oder eine Sandwichbauweise mit Aluminiumdeckblech aufweisen. Darüber hinaus weisen die Türflügel eine Hauptschließkante auf, die sich über die gesamte Höhe des Türflügels erstreckt und parallel zur y-Achse angeordnet ist. Wenn die Türflügel den Einstiegsbereich verschließen, berühren sich ihren Hauptschließkanten. Die in Schließrichtung vordere Kante des Türflügels ist somit die Hauptschließkante. Dies gilt auch bei Einstiegsbereichen, die durch einen Türflügel verschlossen werden. Die jeweils der Hauptschließkante gegenüberliegenden Seite wird als Nebenschließkante bezeichnet. Zum besseren Verständnis wird in einem orthogonalen Koordinatensystem die Breite des Türflügels in Richtung der x-Achse definiert. Die Höhe des Türflügels erstreckt sich in Richtung der y-Achse und die Dicke des Türflügels in Richtung der z-Achse.

Entlang der Hauptschließkante ist in der Regel ein Fingerschutzgummi vorgesehen, das aus einem elastischen Material gefertigt ist, welches nachgibt, wenn beispielsweise eine Hand in der Tür eingeklemmt wird, wodurch Verletzungen vermieden werden. Zusätzlich kann in dem Fingerschutzgummi Sicherheitstechnik vorgesehen sein, wie beispielsweise Drucksensoren, die einen Druckanstieg registrieren können. Wenn ein Druckanstieg registriert wird, wird der Einstiegsbereich umgehend wieder geöffnet oder die Schließbewegung wird unterbrochen.

Ein beispielhafter Betriebszustand des Einstiegsbereichs ist die Schließbewegung der Türflügel. Dieser Betriebszustand kann dem Fahrgast durch eine optische und/oder akustische Anzeige angezeigt werden. Vor und während des Schließens des Einstiegsbereichs durch die Türflügel ertönt in der Regel ein Hinweiston, welcher durch eine blinkende oder durchgehend leuchtende Lichtquelle begleitet sein kann. Die Lichtquelle kann oberhalb der Tür an einer Innen- und/oder Außenseite des Busses oder der Bahn vorgesehen sein. Nachteilig an dieser Position der Lichtquelle ist jedoch, dass sie durch einen Fahrgast, der direkt vor der Tür steht, nicht ohne weiteres wahrgenommen wird. Deshalb ist die Lichtquelle häufig in die Fläche des Türflügels eingebracht, jedoch muss hierfür dessen Konstruktion deutlich verändert werden.

Eine weitere Lösung sieht vor, dass das Fingerschutzgummi aus einem nicht eingefärbten Silikon gefertigt ist. Eine Lichtquelle ist an der entlang der y-Achse angeordneten Stirnseite des Türflügels im Bereich der Hauptschließkante angeordnet. Das Fingerschutzgummi leitet und streut die Lichtemission zum Betrachter. Da das Fingerschutzgummi im Einstiegsbereich angeordnet ist, kann es verunreinigt werden, indem beispielsweise Taschen gegen das Fingerschutzgummi stoßen oder Fahrgäste sich an ihm abstützen. Eine raue Oberfläche des Silikons kann diesen Effekt verstärken. Nachteilig an dieser Lösung ist daher, dass Verschmutzungen des Silikons die Sichtbarkeit der Lichtemission vermindern können.

Bei Ganzglastürflügeln wird die Tür durch einen metallischen Rahmen mit Glasscheiben gebildet. Durch die große Glasfront können elektrische Leitungen nur im Bereich des metallischen Rahmens untergebracht werden. Da Ganzglastürflügel somit anders als Sandwichtürflügel keine Deckbleche aufweisen, ist die Integration von zusätzlichen Modulen, wie Lichtquellen oder Sensoren, erschwert und wird ebenfalls meistens auf den Bereich des metallischen Rahmens beschränkt.

Die Druckschrift US 2019/0255923 A1 offenbart einen Türflügel für Kraftfahrzeuge und Schienenfahrzeuge mit einem in Leuchtprofil, wobei der Türflügel an seiner Hauptschließkante eine Lichtquelle aufweist.

Die zu lösende Aufgabe der vorliegenden Erfindung besteht darin, die Integration einer Lichtquelle in einen Türflügel weniger aufwendig und kostengünstiger zu gestalten. Weiter soll die Anzeige für den Fahrgast gut sichtbar sein.

Die genannte Aufgabe wird durch einen modularen Türflügel mit den Merkmalen des Patentanspruchs 1 gelöst. Vorteilhafte Weiterbildungen sind Gegenstand der abhängigen Patentansprüche.

Ein erfindungsgemäßer modularer Türflügel, insbesondere für Kraftfahrzeuge und Schienenfahrzeuge, weist eine Hauptschließkante auf, wobei an der Hauptschließkante eine Lichtquelle angeordnet ist. Der Türflügel kennzeichnet sich durch ein Leuchtprofil, das an der Hauptschließkante angeordnet ist und, das dazu eingerichtet ist, die Lichtemission der Lichtquelle zu leiten und zu streuen.

Der Türflügel verschließt über eine Schiebe-, Schwenk- oder Schwenkschiebebewegung den Einstiegsbereich eines Busses oder einer Bahn. In der Regel ist der Türflügel rechteckig, wobei die Hauptschließkante an einer Längsseite angeordnet ist. An der Stirnseite des Türflügels sind im Bereich der Hauptschließkante ein lichtdurchlässiges Leuchtprofil und eine Lichtquelle, bevorzugt eine RGB(W)-Leuchtdiode, angeordnet. Leuchtdioden (LED)-Leuchtmittel bzw. LED-Leuchtstreifen weisen bei langer Lebensdauer und geringem Wartungsaufwand einen geringen Strombedarf auf. Gleichzeitig können sie aufgrund ihrer flexiblen Struktur an komplexeren geometrischen Formen montiert werden, wie beispielsweise an Türflügel mit Bombierung.

Die Lichtquelle ist am Türflügel montiert und strahlt in x-Richtung in das Leuchtprofil. Das Leuchtprofil dient als Lichtleiter und Streukörper, wodurch die Lichtemission gleichmäßig in alle Richtungen umgeleitet wird. Eine einzelne Lichtquelle ist dadurch nicht mehr separat erkennbar.

Der Fahrgast kann die nach außen geleitete Lichtemission wahrnehmen und einen Betriebszustand des Einstiegsbereichs erkennen. Die Lichtquelle kann je nach Betriebszustand blinken oder durchgehend leuchten. Die Lichtemission kann sowohl der Fahrgast sehen, der sich im Fahrzeug befindet, als auch der Fahrgast, der sich außerhalb des Busses bzw. Bahn befindet. Alternativ ist es auch möglich, dass die Lichtemission nur in das Fahrzeuginnere oder nach außen strahlt. So ist es beispielsweise möglich, dass die Illumination des Leuchtprofils dem Fahrgast auf dem Bahnsteig anzeigt, welche Waggons stark belegt sind und welche nicht, sodass der Fahrgast noch auf dem Bahnsteig sich entsprechend zu den weniger belegten Waggons orientieren kann, noch währen der Zug in den Bahnhof einfährt.

Eine weitere alternative Möglichkeit ist, dass in dem Leuchtprofil zwei Lichtquellen angeordnet sind, die durch eine Trennschicht voneinander getrennt sind. Dadurch kann beispielsweise eine Lichtquelle nur in das Fahrzeuginnere strahlen, wobei die andere Lichtquelle nur nach außen vom Fahrzeug strahlen kann, wodurch sie nur von den Fahrgästen außerhalb des Fahrzeugs wahrgenommen werden kann. Diese Lösung hat den Vorteil, dass beispielsweise durch eine zweifarbige Illuminierung der Lichtquellen mit beispielsweise den Farben grün und rot die Fahrgastströme aus dem Fahrzeug und in das Fahrzeug gesteuert werden können.

Das Leuchtprofil kann unabhängig vom Türflügel in seiner geometrischen Form den individuellen Kundenwünschen angepasst werden und beispielsweise breiter oder schmaler gestaltet werden. Für die Integration des Leuchtprofils am Türflügel muss lediglich die Stirnseite des Türflügels im Bereich der Hauptschließkante konstruktiv angepasst werden. Somit eignet sich der erfindungsgemäße Türflügel auch für Türflügel mit Bombierung.

Erfindungsgemäß ist ein Fingerschutzgummi am Leuchtprofil an der dem Türflügel gegenüberliegenden Seite des Leuchtprofils in der zweiten Leuchtprofilnut angeordnet.

Das Fingerschutzgummi ist aus einem elastischen Material, bevorzugt aus Silikon, gefertigt.

Vorteilhafterweise erstreckt sich das Leuchtprofil über die gesamte Höhe der Hauptschließkante, wodurch die Lichtemission für den Fahrgast problemlos sichtbar ist. Darüber hinaus kann auch an der Nebenschließkante ein illuminiertes Leuchtprofil angeordnet sein, indem die Konstruktion des Türflügels an der Nebenschließkante um die Breite des Leuchtprofils reduziert wird. Das Leuchtprofil ist am Türflügel in der gleichen Art und Weise wie an der Hauptschließkante angeordnet und kann sich über die gesamte Höhe der Nebenschließkante erstrecken.

Bevorzugt weist der Türflügel eine Türflügelnut auf. Die Türflügelnut ist dabei an der Stirnseite des Türflügels im Bereich der Hauptschließkante angeordnet. In der Türflügelnut ist das Leuchtprofil befestigt und wird durch Türflügelkröpfungen arretiert, die in z-Richtung zu einander ausgerichtet sind und die Nut endseitig in x-Richtung verengen. Bei der Montage des Türflügels wird das Leuchtprofil in die Türflügelnut geschoben und muss nur in y-Richtung zusätzlich arretiert werden. Dadurch werden Montagezeiten und -kosten reduziert. Ergänzend kann das Leuchtprofil an den Türflügel angeklebt oder geschraubt oder vergleichbar befestigt werden.

Besonders vorteilhaft ist es, wenn die Lichtquelle an einem Nutgrund der Türflügelnut angeordnet ist. Die Lichtquelle ist für Wartungsarbeiten ohne großen Aufwand zugänglich und abnehmbar, nachdem das Leuchtprofil aus der Türflügelnut entfernt wurde. Die Lichtquelle kann beispielsweise durch Kleben, über eine Schraubverbindung oder über eine vergleichbare Verbindung am Nutgrund befestigt sein. Lösbare Verbindungen haben den Vorteil, dass die Lichtquelle bei einem Defekt problemlos ausgetauscht werden kann. Die Lichtquelle ist in der Türflügelnut durch äußere Einflüsse geschützt, wie beispielsweise Feuchtigkeit oder mechanische Beanspruchungen wie beispielsweise Stöße.

Erfindungsgemäß bildet das Leuchtprofil eine erste Leuchtprofilnut und eine zweite Leuchtprofilnut aus, wobei die Form der ersten Leuchtprofilnut auf die Form der Lichtquelle abgestimmt ist. Dadurch ist eine kompakte Bauweise des Leuchtprofils möglich.

Bei einer weiteren bevorzugten Ausgestaltung des Türflügels bilden Wandungen der ersten Leuchtprofilnut endseitig zueinander gerichtete erste Leuchtprofilkröpfungen aus, sodass die Lichtquelle beabstandet zum Nutgrund in der ersten Leuchtprofilnut gehalten ist. Somit ist die Lichtquelle in x-Richtung arretiert und muss nicht zusätzlich angeschraubt oder angeklebt werden. Es lediglich eine Arretierung in y-Richtung notwendig. Der Montage- als auch der Wartungsaufwand werden dadurch deutlich verringert.

Der Türflügel kann vorteilhafterweise so ausgebildet sein, dass Wandungen der zweiten Leuchtprofilnut endseitig zueinander gerichtete zweite Leuchtprofilkröpfungen aufweisen, die dazu vorgesehen sind, das Fingerschutzgummi in x-Richtung zu arretieren. Auch hier ist lediglich eine Arretierung des Fingerschutzgummis in y-Richtung notwendig. Diese Arretierung kann eine lösbare Verbindung sein, die beispielsweise an der unteren Türflügelkante erfolgen kann, wodurch ebenfalls ein geringer Montage- und Wartungsaufwand erreicht wird.

Dadurch, dass die Lichtquelle, das Leuchtprofil und das Fingerschutzgummi in Nuten gehalten sind, können diese Bauteile auch als Baugruppe vom Türflügel entfernt werden, wodurch ebenfalls der Wartungsaufwand reduziert wird.

Nach einer weiteren vorteilhaften Ausgestaltung des Türflügels ist eine intransparente Schicht innerhalb der zweiten Leuchtprofilnut zwischen dem Leuchtprofil und dem Fingerschutzgummi angeordnet. Die intransparente Schicht verhindert, dass das Fingerschutzgummi durch das Leuchtprofil hindurch sichtbar ist. Die intransparente Schicht weist vorzugsweise eine reflektierende Oberfläche auf ihrer dem Leuchtprofil zugewandten Seite auf, die die Lichtemission der Lichtquelle reflektiert und zum Betrachter umleitet.

Der Türflügel kann auch dadurch gekennzeichnet sein, dass das Leuchtprofil aus einem Kunststoff gefertigt ist.

Vorteilhafterweise weisen der Türflügel, das Leuchtprofil und das Fingerschutzgummi eine einheitliche Stärke in z-Richtung auf und fluchten zueinander.

Weitere vorteilhafte Ausgestaltungen der vorliegenden Erfindung ergeben sich aus der nachfolgenden Beschreibung unter Bezugnahme auf die Figuren. Die Figuren zeigen lediglich Ausführungsbeispiele und sollen nicht einschränkend zu verstehen sein. In den Figuren zeigen
- Fig. 1: eine schematische Darstellung von zwei Ganzglastürflügeln,
- Fig. 2: eine schematische Darstellung eines Teilbereichs eines Querschnitts einer Hauptschließkante eines ersten Ausführungsbeispiels,
- Fig. 3: eine schematische Darstellung eines Teilbereichs des Querschnitts einer Hauptschließkante eines zweiten Ausführungsbeispiels und
- Fig. 4: eine schematische Darstellung eines Teilbereichs des Querschnitts einer Hauptschließkante eines dritten Ausführungsbeispiels.

In den Figuren ist zum besseren Verständnis ein orthogonales Koordinatensystem mit einer x-Achse, einer y-Achse und einer z-Achse dargestellt. Dabei erstreckt sich die x-Achse entlang einer Breite eines Türflügels 20, die y-Achse entlang einer Längsseite (Höhe) des Türflügels 20 und die z-Achse entlang der Türflügeltiefe.

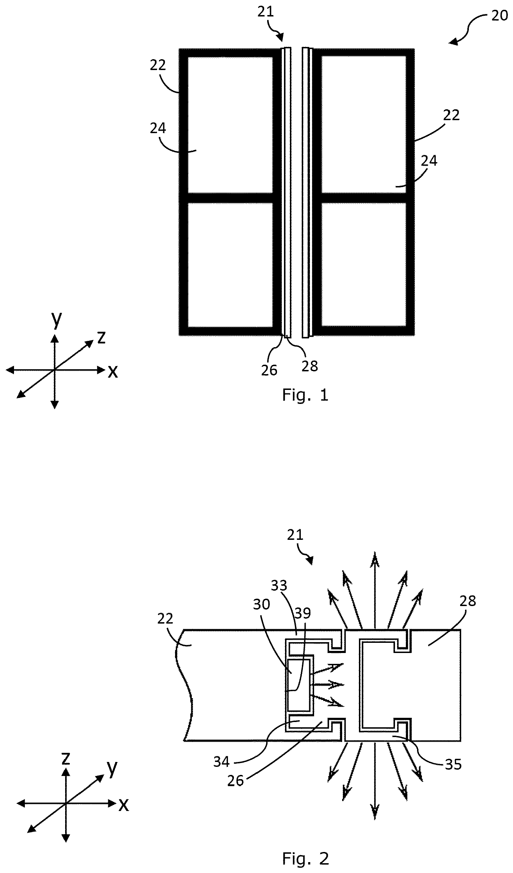

Die Figur 1 zeigt eine schematische Darstellung von Türflügeln 20 in einer Ganzglasbauweise. Die Türflügel 20 sind dazu eingerichtet, einen Einstiegsbereich von beispielsweise einem Bus oder einer Bahn zu verschließen. Ein Türflügel 20 weist einen rechteckigen Rahmen 22 auf, in welchen im gezeigten Ausführungsbeispiel zwei großflächige Glasscheiben 24 eingebracht sind. Der Rahmen 22 kann zum Beispiel aus einem metallischen Werkstoff wie Aluminium oder auch aus einem Faserverbundwerkstoff gefertigt sein.

Die in Schließrichtung vordere Kante des Türflügels 20 wird als Hauptschließkante 21 bezeichnet. Die Hauptschließkante 21 erstreckt sich somit entlang der y-Achse und über die gesamte Höhe des Türflügels 20. An der Hauptschließkante 21 ist ein Leuchtprofil 26 angeordnet. Das Leuchtprofil 26 ist vorzugsweise aus einem diffusen Kunststoffmaterial gefertigt. Ferner ist an der Hauptschließkante 21 eine Lichtquelle 30 (siehe Figuren 2 bis 4) angeordnet, deren Lichtemission in das Leuchtprofil 26 einstrahlt. Die Lichtemission kann in z-Richtung nach innen ins Fahrzeuginnere und nach außen geleitet werden. Somit kann ein Betrachter, der sich im Fahrzeuginneren befindet die Leuchtemission wahrnehmen und auch ein Betrachter, der sich außerhalb des Fahrzeugs befindet. Alternativ ist es auch möglich, dass die Lichtemission nur in das Fahrzeuginnere oder nur nach außen geleitet wird.

Die Lichtquelle 30 ist beispielsweise eine RGB(W)-LED. Die LED kann durchgängig leuchten oder blinken, ggf. auch in unterschiedlichen Farben. Auch ist es möglich, dass die Lichtquelle in unterschiedlichen Frequenzen blinkt oder die Lichtemission eine Frequenzänderung während des Blinkens aufweist. Die Lichtquelle 30 ist insbesondere dazu vorgesehen, einen Betriebszustand des Einstiegsbereichs optisch darzustellen. So kann beispielsweise eine rot leuchtende oder blinkende Lichtquelle 30 ein Schließen oder ein Geschlossenbleiben bzw. eine Verriegelung des Einstiegsbereichs signalisieren. Eine grün leuchtende oder blinkende Lichtquelle 30 dagegen kann ein Öffnen oder ein Geöffnetbleiben des Einstiegsbereichs signalisieren.

An dem Leuchtprofil 26 ist im gezeigten Ausführungsbeispiel auf der dem Türflügel 20 abgewandten Seite ein Fingerschutzgummi 28 befestigt, das beispielsweise aus Silikon gefertigt ist. Weiter kann in dem Fingerschutzgummi 28 eine elektrische Schaltleiste integriert sein, die nicht in den Figuren dargestellt ist.

In den Fig. 2 bis 4 sind drei verschiedene bevorzugte Ausführungsbeispiele für eine Gestaltung des Querschnittsprofils des Türflügels 20 im Bereich der Hauptschließkante 21 gezeigt.

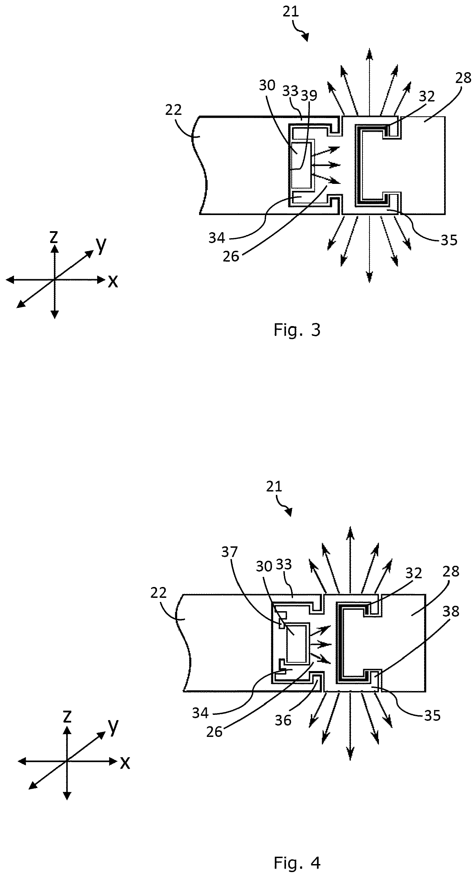

Der Türflügel 20 weist an der Stirnseite im Bereich der Hauptschließkante 21 eine Türflügelnut 33 auf. Die Türflügelnut 33 weist an den sich entlang der x-Achse erstreckenden Wandungen endseitig jeweils zwei Türflügelkröpfungen 36 auf, die entlang der z-Achse angeordnet zueinander gerichtet sind. Die Lichtquelle 30 ist in dieser Türflügelnut 33 angeordnet und bei der Ausführung gemäß der Figuren 2 und 3 am Türflügel 20 angeordnet, also am Nutgrund 39. In der Türflügelnut 33 ist auch das Leuchtprofil 26 gehalten, welches aufgrund der Türflügelkröpfungen 36 in x-Richtung arretiert ist.

Das Leuchtprofil 26 bildet im Querschnitt eine erste Leuchtprofilnut 34 und eine zweite Leuchtprofilnut 35 aus. Die erste Leuchtprofilnut 34 ist innerhalb der Türflügelnut 33 angeordnet, wobei die Form der ersten Leuchtprofilnut 34 mit der Form der Lichtquelle 30 korrespondiert. Die zweite Leuchtprofilnut 35 ist der ersten Leuchtprofilnut 34 gegenüberliegend angeordnet und weist aufeinander zuweisende zweite Leuchtprofilkröpfungen 38 auf. Das Fingerschutzgummi 28 ist in der zweiten Leuchtprofilnut 35 angeordnet und ragt aus dieser heraus. Die zweiten Leuchtprofilkröpfungen 38 arretierende das Fingerschutzgummi 28 in x-Richtung. Der Türflügel 20, das Leuchtprofil 26 und das Fingerschutzgummi 28 weisen eine einheitliche Stärke (in z-Richtung) auf, wodurch diese Bauteile in x-Richtung zueinander fluchten.

Fig. 3 zeigt ein zweites bevorzugtes Ausführungsbeispiel, welches sämtliche Merkmale des ersten Ausführungsbeispiels aufweist. Es weist darüber hinaus innerhalb der zweiten Leuchtprofilnut zwischen dem Leuchtprofil 26 und dem Fingerschutzgummi 28 eine intransparente Schicht 32 auf. Aufgrund der intransparenten Schicht 32 ist das Fingerschutzgummi 28 durch das Leuchtprofil 26 hindurch für den Betrachter nicht sichtbar. Weiter kann die intransparente Schicht 32 eine reflektierende Oberfläche aufweisen, die die Lichtemission der Lichtquelle 30 reflektiert und/oder in Richtung des Betrachters umleitet.

Fig. 4 zeigt ein weiteres bevorzugtes Ausführungsbeispiel, welches nahezu sämtliche Merkmale des zweiten Ausführungsbeispiels aufweist. Anders ist jedoch, dass die Lichtquelle 30 nicht am Nutgrund 39 der Türflügelnut 33 angeordnet, sondern in der ersten Leuchtprofilnut 34 gehalten und somit beabstandet zum Nutgrund 39 angeordnet ist. Hierfür weist die erste Leuchtprofilnut 34 aufeinander zuweisende erste Leuchtprofilkröpfungen 37 auf, die die Lichtquelle 30 in der ersten Leuchtprofilnut 34 halten und entlang der x-Achse arretieren.

Für die Montage des Türflügels 20 können die einzelnen Bauteile 26, 28, 30 entlang der y-Achse in die jeweiligen korrespondieren Nuten 33, 34, 35 geschoben werden. Die Arretierung des Türflügels 20, der Lichtquelle 30, des Leuchtprofils 26 und des Fingerschutzgummis 28 in y-Richtung kann beispielsweise durch Verschrauben oder Verkleben der einzelnen Bauteile erfolgen.

### Bezugszeichenliste

- 20: Türflügel
- 21: Hauptschließkante
- 22: Rahmen
- 24: Glasscheibe
- 26: Leuchtprofil
- 28: Fingerschutzgummi
- 30: Lichtquelle
- 32: Intransparente Schicht
- 33: Türflügelnut
- 34: erste Leuchtprofilnut
- 35: zweite Leuchtprofilnut
- 36: Türflügelkröpfung
- 37: erste Leuchtprofilkröpfung
- 38: zweite Leuchtprofilkröpfung
- 39: Nutgrund

## Patentansprüche

1. Türflügel (20) für Kraftfahrzeuge und Schienenfahrzeuge, aufweisend eine Hauptschließkante (21), wobei
- an der Hauptschließkante (21) eine Lichtquelle (30) angeordnet ist,
- ein Leuchtprofil (26) an der Hauptschließkante (21) angeordnet und dazu eingerichtet ist, eine Lichtemission der Lichtquelle (30) zu leiten und zu streuen, wobei das Leuchtprofil (26) eine erste Leuchtprofilnut (34) und eine zweite Leuchtprofilnut (35) ausbildet, und wobei die Form der ersten Leuchtprofilnut (34) derart an die Form der Lichtquelle (30) angepasst ist, dass die Lichtquelle (30) in dieser angeordnet ist,
- **dadurch gekennzeichnet, dass** ein Fingerschutzgummi (28) am Leuchtprofil (26) an der dem Türflügel (20) gegenüberliegenden Seite des Leuchtprofils (26) in der zweiten Leuchtprofilnut (35) angeordnet ist.

2. Türflügel (20) nach Anspruch 1, **dadurch gekennzeichnet, dass** sich das Leuchtprofil (26) über die gesamte Höhe der Hauptschließkante (21) erstreckt.

3. Türflügel (20) nach einem der vorangehenden Ansprüche, **dadurch gekennzeichnet, dass** in die Hauptschließkante (21) eine Türflügelnut (33) eingelassen ist, die zueinander gerichtete Türflügelkröpfungen (36) aufweist, die dazu vorgesehen sind, das Leuchtprofil (26) in Richtung der Türflügelbreite (x-Richtung) zu arretieren.

4. Türflügel (20) nach Anspruch 3, **dadurch gekennzeichnet, dass** die Lichtquelle (30) an einem Nutgrund (39) in der Türflügelnut (33) angeordnet ist.

5. Türflügel (20) nach Anspruch 4, **dadurch gekennzeichnet, dass** Wandungen der ersten Leuchtprofilnut (34) endseitig zueinander gerichtete erste Leuchtprofilkröpfungen (37) ausbilden, sodass die Lichtquelle (30) beabstandet zum Nutgrund (39) von der ersten Leuchtprofilnut (34) gehalten ist.

6. Türflügel (20) nach dem Anspruch 5, **dadurch gekennzeichnet, dass** Wandungen der zweiten Leuchtprofilnut (35) endseitig zueinander gerichtete zweite Leuchtprofilkröpfungen (38) aufweisen, die dazu vorgesehen sind, das Fingerschutzgummi (28) in Richtung der Türflügelbreite (x-Richtung) zu arretieren.

7. Türflügel (20) nach einem der Ansprüche 1 bis 6, **dadurch gekennzeichnet, dass** zwischen dem Leuchtprofil (26) und dem Fingerschutzgummi (28) eine intransparente Schicht (32) angeordnet ist, die verhindert, dass das Fingerschutzgummi (28) durch das Leuchtprofil (26) hindurch sichtbar ist.

8. Türflügel (20) nach Anspruch 7, **dadurch gekennzeichnet, dass** die intransparente Schicht (32) eine reflektierende Oberfläche aufweist, die die Lichtemission der Lichtquelle (30) reflektiert und zum Betrachter umleitet.

9. Türflügel (20) nach einem der vorangehenden Ansprüche, **dadurch gekennzeichnet, dass** das Leuchtprofil (26) aus einem diffusen Kunststoff gefertigt ist.

10. Türflügel (20) nach einem der Ansprüche 1 bis 9, **dadurch gekennzeichnet, dass** der Türflügel (20), das Leuchtprofil (26) und das Fingerschutzgummi (28) eine einheitliche Stärke in Richtung der Türflügeldicke (z-Richtung) aufweisen und zueinander fluchten.

## Claims

1. A door leaf (20) for motor vehicles and rail vehicles, comprising a primary closing edge (21), wherein
- a light source (30) is disposed on the primary closing edge (21),
- a light profile (26) is disposed on the primary closing edge (21) and configured for conducting and scattering a light emission of the light source (30), wherein the light profile (26) forms a first light profile groove (34) and a second light profile groove (35), and wherein the shape of the first light profile groove (34) is adapted to the shape of the light source (30) such that the light source (30) is disposed therein,
- **characterized in that**
a rubber finger guard (28) is disposed on the light profile (26) on the side of the light profile (26) opposite the door leaf (20) in the second light profile groove (35).

2. The door leaf (20) according to Claim 1, **characterized in that** the light profile (26) extends over the entire height of the primary closing edge (21).

3. The door leaf (20) according to one of the preceding claims, **characterized in that** a door leaf groove (33) having door leaf offsets (36) directed towards one another and provided for arresting the light profile (26) in the direction of the door leaf width (x-direction), is inserted into the primary closing edge (21).

4. The door leaf (20) according to Claim 3, **characterized in that** the light source (30) is disposed on a groove bottom (39) in the door leaf groove (33).

5. The door leaf (20) according to Claim 4, **characterized in that** walls of the first light profile groove (34) form at the end side first light profile offsets (37) directed towards one another, so that the light source (30) is kept spaced apart from the groove bottom (39) by the first light profile groove (34).

6. The door leaf (20) according to Claim 5, **characterized in that** walls of the second light profile groove (35) have on the end side second light profile offsets (38) directed towards one another, which are provided for arresting the rubber finger guard (28) in the direction of the door leaf width (x-direction).

7. The door leaf (20) according to one of Claims 1 to 6, **characterized in that** an intransparent layer (32), which prevents the rubber finger guard (28) from being visible through the light profile (26), is disposed between the light profile (26) and the rubber finger guard (28).

8. The door leaf (20) according to Claim 7, **characterized in that** the intransparent layer (32) has a reflective surface which reflects the light emission of the light source (30) and diverts it to the observer.

9. The door leaf (20) according to one of the preceding claims, **characterized in that** the light profile (26) is made from a diffuse plastic.

10. The door leaf (20) according to one of Claims 1 to 9, **characterized in that** the door leaf (20), the light profile (26), and the rubber finger guard (28) have a uniform thickness in the direction of the door leaf thickness (z-direction) and are aligned to one another.

## Revendications

1. Vantail de porte (20) pour véhicules automobiles et véhicules ferroviaires, présentant un bord de fermeture principal (21), dans lequel
- une source lumineuse (30) est disposée sur le bord de fermeture principal (21),
- un profilé d'éclairage (26) est disposé sur le bord de fermeture principal (21) et est conçu pour guider et diffuser l'émission de lumière depuis la source lumineuse (30), dans lequel le profilé d'éclairage (26) présente une première rainure de profilé d'éclairage (34) et une deuxième rainure de profilé d'éclairage (35), et dans lequel la forme de la première rainure de profilé d'éclairage (34) est adaptée à la forme de la source lumineuse (30) de telle sorte que la source lumineuse (30) soit disposée dans celle-ci,
- **caractérisé en ce que** un caoutchouc de protection des doigts (28) est disposé sur le profilé lumineux (26) sur le côté opposé au vantail de porte (20) du profilé d'éclairage (26) dans la deuxième rainure de profilé d'éclairage (35).

2. Vantail de porte (20) selon la revendication 1, **caractérisé en ce que** le profilé d'éclairage (26) s'étend sur toute la hauteur du bord principal de fermeture (21).

3. Vantail de porte (20) selon une des revendications précédentes, **caractérisé en ce qu'**une rainure du vantail de porte (33) est encastrée dans le bord de fermeture principal (21), qui présente des manivelles de vantail (36) mutuellement orientées l'une vers l'autre, qui sont prévues pour verrouiller le profilé lumineux (26) dans la direction de largeur du vantail (direction x).

4. Vantail de porte (20) selon la revendication 3, **caractérisé en ce que** la source lumineuse (30) est disposée sur un fond de rainure (39) dans la rainure du vantail de porte (33).

5. Vantail de porte (20) selon la revendication 4, **caractérisé en ce que** les parois de la première rainure de profilé d'éclairage (34) forment des premières manivelles de profilé d'éclairage (37) orientées l'une vers l'autre aux extrémités, de sorte que la source lumineuse (30) soit espacée de la base de rainure (39) de la première rainure de profilé d'éclairage (34).

6. Vantail de porte (20) selon la revendication 5, **caractérisé en ce que** les parois de la deuxième rainure de profilé d'éclairage (35) présentent aux extrémités des deuxièmes manivelles de profilé d'éclairage (38) dirigées l'une vers l'autre, qui sont prévues pour verrouiller le caoutchouc de protection des doigts (28) dans la direction de largeur du vantail de porte (direction x).

7. Vantail de porte (20) selon une des revendications 1 à 6, **caractérisé en ce qu'**une couche non transparente (32) est disposée entre le profilé lumineux (26) et le caoutchouc de protection des doigts (28), qui empêche que le caoutchouc de protection des doigts (28) soit visible à travers le profilé lumineux (26).

8. Vantail de porte (20) selon la revendication 7, **caractérisé en ce que** la couche non transparente (32) présente une surface réfléchissante, qui réfléchit l'émission lumineuse de la source lumineuse (30) et la redirige vers le spectateur.

9. Vantail de porte (20) selon une des revendications précédentes, **caractérisé en ce que** le profilé d'éclairage (26) est réalisé en une matière plastique diffuse.

10. Vantail de porte (20) selon une des revendications 1 à 9, **caractérisé en ce que** le vantail de porte (20), le profilé d'éclairage (26) et le caoutchouc de protection des doigts (28) ont une épaisseur uniforme dans la direction d'épaisseur du vantail de porte (direction z) et sont alignés les uns avec les autres.
